# EUROPÄISCHE PATENTANMELDUNG

(11) **EP 1 500 998 A2**
(43) Veröffentlichungstag der Anmeldung: **26.01.2005**
(21) Anmeldenummer: 04017261.1
(22) Anmeldetag: 22.07.2004
(51) Int. Cl.: G05D 16/06

(54) **Druckregleranordnung**

(30) Priorität: 24.07.2003 DE 10333868
(71) Anmelder: DSI Getränkearmaturen GmbH, 59069 Hamm-Rhynern (DE)
(72) Erfinder: Rottger, Konstantin, 59757 Arnsberg (DE)
(74) Vertreter: Griepenstroh, Jörg

(57) **Zusammenfassung**

Die Erfindung betrifft eine Druckregleranordnung zur Regelung des Gasdrucks eines insbesondere CO₂-haltigen Gases in einer Zapfanlage mit einem Reglergehäuse (2), in welchem ein Regelventil (6) mit einem gegenüber dem Reglergehäuse (2) verlagerbaren Ventilkörper (7) angeordnet ist. Das Reglergehäuse (2) ermöglicht die nachträgliche Eingliederung eines Temperaturweggebers (39). Die Erfindung ermöglicht eine automatische thermisch geregelte Beeinflussung des Sättigungsdruckes in einer Zapfanlage, abhängig von dem getränkespezifischen CO₂-Gehalt bei zunehmender und abnehmender Temperatur durch lineare Annäherung an den kurvenförmigen Sättigungsdampfdruckverlauf innerhalb eines Arbeitsbereiches von z.B. 0°C bis 30°C.

## Beschreibung

Die Erfindung betrifft eine Druckregleranordnung mit den Merkmalen des Oberbegriffs des Patentanspruchs 1.

In der Gastronomie werden überwiegend kohlensäurehaltige Getränke ausgeschenkt, wie z.B. Bier. Der Geschmack und das Erscheinungsbild des Getränks wird unter anderem durch seinen CO₂ - Gehalt bestimmt. Der CO₂-Gehalt kann in Gramm je Liter (g/l) gemessen werden. Zum Beispiel bestimmt bei Bier der Brauprozess den CO₂-Gehalt. Dieser kann bei jeder Biersorte unterschiedlich hoch sein und liegt üblicherweise zwischen 4 g/l und 7 g/l. Um den gewünschten CO₂-Gehalt im Getränk aufrecht zu erhalten, ist ein geschlossenes Behältnis erforderlich. Darin stellt sich dann zwischen dem in der Flüssigkeit, d.h. in dem Getränk gelösten CO₂ und dem darauf lastenden Gaspolster ein Sättigungsdruck ein, der in Abhängigkeit zur Flüssigkeitstemperatur steht.

Im Ausschank wird heute oft derart verfahren, dass das zu zapfende Getränk in einem geschlossenen Behältnis gelagert wird, welches mit einem Gaspolster, z.B.

CO₂ oder einem CO₂/N₂-Gemisch beaufschlagt ist. Wird Flüssigkeit aus dem geschlossenen Behältnis entnommen, so drückt das Gaspolster diese durch ein Steigrohr aus dem Behältnis und durch eine Zuflussleitung zum Zapfventil. Der Flüssigkeitspegel sinkt dabei innerhalb des geschlossenen Behältnisses. Es muss daher in gleichem Umfang Gas nachgespeist werden. Dies geschieht üblicherweise durch eine Druckregeleinheit, die durch ein in Hochdruckflaschen gelagertes Gas versorgt wird. Der eingestellte Druck der Druckregeleinheit sollte dem Sättigungsdruck der zu zapfenden Flüssigkeit entsprechen. Liegt der eingestellte Druck am Druckregler über dem Sättigungsdruck des Gases, so kommt es bei Verwendung von CO₂ zum Aufkarbonisieren des Getränks. Liegt der eingestellte Druck am Druckregler hingegen unter dem Sättigungsdruck, so kommt es zur Entkarbonisierung der Flüssigkeit. Beides beeinflusst in ungewünschtem Maße den Geschmack des Getränks und hat gleichfalls einen negativen Einfluss auf die einwandfreie Funktionsweise der Schankanlage.

Um den Einfluss der Temperatur auf den Sättigungsdruck zu eliminieren, werden die Behältnisse bei einer konstanten Temperatur gelagert, unter der sie sich auch im Anstich befinden. Um Getränken, insbesondere Bieren, mit verschieden hohen CO₂-Gehalt gerecht zu werden, wird üblicherweise ein Hauptdruckregler verwendet, der direkt an der Gasversorgung aus einer Hochdruckflasche angeschlossen ist. Dieser Hauptdruckregler ist mit einem Sicherheitsventil versehen, um zu gewährleisten, dass nachgeschaltete Bauelemente nicht mit einem zu hohen Betriebsdruck beaufschlagt werden können. Dem Hauptdruckregler sind dann Zwischendruckregler in der Regel ohne Sicherheitsventil nachgeschaltet, die individuell auf den benötigten Sättigungsdruck der Getränke in den nachgeordneten Behältnissen eingestellt werden können. Auf diese Weise können gleichzeitig z.B. unterschiedliche Biersorten mit unterschiedlichem CO₂-Gehalt im Anstich sein. Ist nur eine Biersorte im Ausschank, s o kann prinzipiell nur mit einem Hauptdruckregler gearbeitet werden. Das gleiche gilt für mehrere Biersorten, solange ihr CO₂-Gehalt gleich ist.

Aus dem Stand der Technik (FR 2 490 311 A1, DE 3 429 299 A1, FR 2 573 410 A1, US 20030000971 A1) ist es bekannt, bei Zapfanlagen Druckregler zu verwenden, welche die Temperaturschwankungen automatisch nachregeln, so dass bei steigenden Außentemperaturen der eingeregelte Druck ebenfalls steigt. Sinkt die Außentemperatur, wird das über dem Sättigungsdruck liegende Gaspolster nur dann abgebaut, wenn Flüssigkeit entnommen wird. Wird keine Flüssigkeit entnommen, so wird das Getränk bei anhaltend niedrigen Temperaturen in unerwünschter Weise aufkarbonisiert.

Weiterhin ist in dem oben genannten Stand der Technik beschrieben, dass ein Hauptdruckregler mit einer thermisch beeinflussten Regeleinheit ausgestattet sein kann. Bei der Verwendung einer thermisch beeinflussten Regeleinheit muss bei der manuellen Druckeinstellung darauf geachtet werden, dass unter keinen Umständen das Sicherheitsventil anspricht, wenn der Hauptdruckregler den Arbeitsdruck aufgrund steigender Außentemperaturen automatisch erhöht. Bei der Planung einer Zapfanlage muss zudem frühzeitig eine Entscheidung getroffen werden, ob Druckregler mit oder ohne Thermofunktion zum Einsatz kommen sollen. Ein nachrüstbares Thermoelement ist zwar in der FR 2 573 410 A1 beschrieben, allerdings wird hierbei eine gleichzeitige manuelle Regelung unmöglich, so dass der dort beschriebene Druckregler nur auf eine Getränkesorte mit einem bestimmten CO₂-Gehalt eingestellt werden kann. Die Umrüstung ist relativ aufwendig.

Da aus Platz- und Kostengründen oftmals eine konstante Temperierung der Getränke nicht möglich ist, werden Druckregler zur Zeit nach entsprechenden Tabellenwerten manuell nachgeregelt, damit der Geschmack des Getränks und die einwandfreie Funktionsweise der Zapfanlage durch Temperaturschwankungen nicht negativ beeinflusst wird. In der Praxis unterbleibt diese Nachregelung oftmals. Herkömmliche Druckregler lassen sich entweder gar nicht oder nur durch Einbuße der manuellen Einstellmöglichkeit nachrüsten, so dass bei einer nachträglichen Änderung der Zapfanlagenkonfiguration weit reichende Änderungen an den Druckreglungseinheiten vorgenommen werden müssen, bis hin zum Austausch von Bestandteilen der Anlage.

Hiervon ausgehend liegt der Erfindung die Aufgabe zugrunde, eine Druckregleranordnung zur Regelung des Gasdrucks eines CO₂-haltigen Gases in einer Zapfanlage aufzuzeigen, welcher sowohl als manuell einstellbarer Druckregler verwendbar ist, aber zusätzlich auch mit einer Thermofunktion nachrüstbar ist und gleichzeitig eine annähernd optimale Regelung des Sättigungsdrucks in einem bestimmten Temperaturbereich für Getränke mit unterschiedlichem CO₂-Gehalt ermöglicht.

Die Erfindung wird durch eine Druckregleranordnung mit den Merkmalen des Patentanspruchs 1 gelöst.

Die erfindungsgemäße Druckregleranordnung umfasst einen ersten Druckregler zur Regelung des Gasdrucks eines CO₂-haltigen Gases in einer Zapfanlage mit einem Reglergehäuse, in welchem ein Regelventil mit einem gegenüber dem Reglergehäuse verlagerbaren Ventilkörper angeordnet ist. Der Ventilkörper wird von einer Schließfeder in einer Schließstellung gehalten. In der Schließstellung ist der Vordruckbereich von dem Hinterdruckbereich getrennt. Sinkt der Hinterdruck, d.h. der Arbeitsdruck, wirkt eine Hauptregelfeder entgegen der Federkraft der Schließfeder auf den Ventilkörper, so dass dieser öffnet und CO₂ oder ein entsprechendes G asgemisch, w ie z.B. CO₂/N₂, e inen Überströmkanal passiert u nd dem Hinterdruckbereich zugeführt wird. Dadurch steigt der Druck im Hinterdruckbereich. Der steigende Hinterdruck wirkt der Federkraft der Regelfeder entgegen, d.h. der Ventilkörper schließt mit Hilfe der Schließfeder wieder. An dem ersten D ruckregler s ind M ittel zur Ankopplung eines zweiten D ruckreglers in F orm eines Temperaturweggebers vorgesehen. Dieser besitzt eine mit einem inkompressiblen Fluid gefüllte Expansionskammer und Mittel zur Übertragung der Volumenumänderung des Fluids in eine Linearbewegung, die wiederum auf eine gegen die Federkraft der Schließfeder gerichtete Feder wirkt. Der wesentliche Vorteil ist, dass die Druckregler nachträglich miteinander koppelbar sind, wobei die manuelle Einstellbarkeit des ersten Druckreglers erhalten bleibt und nicht durch das Anschließen des zweiten Druckreglers verloren geht.

Je nach Anwendungsbereich hat der Benutzer eines ersten Druckreglers die Möglichkeit, diesen nach entsprechenden Tabellenwerten jeweils manuell nachzuregeln, wobei die Temperaturschwankungen der Umgebungsluft nicht automatisch ausgeglichen werden. Es besteht allerdings zusätzlich die Möglichkeit, einen Temperaturweggeber nachträglich an dem Druckregler zu befestigen, um auf diese Weise eine temperaturabhängige automatische Druckregelung innerhalb eines bestimmten Temperaturbereichs zu gewährleisten. Die Hauptregelfeder ist dabei so ausgelegt, dass mit den vorhandenen Stellmitteln - das ist insbesondere ein Handradmechanismus - der gesamte üblicherweise verwendete Druckbereich von 0 - 3 bar bzw. 4 bar eingestellt werden kann. Durch die nachträgliche Montage des Temperaturweggebers und der damit verbundenen Thermofunktion, regelt der Druckregler den Druck automatisch entsprechend der Temperaturzunahme oder Temperaturabnahme nach.

In einer ersten Ausführungsform (Patentanspruch 2) umschließt die Hauptregelfeder einen offenen zylindrischen Innenraum, in den in Parallelschaltung zur Hauptregelfeder eine weitere austauschbare Regelfeder eingliederbar ist. Die Eingliederbarkeit einer weiteren Regelfeder eröffnet einen erweiterten Anwendungsbereich der erfindungsgemäßen Druckregleranordnung, denn die Federrate der austauschbaren Regelfeder beeinflusst den Druckverlauf. Durch den Einbau einer zweiten Regelfeder mit jeweils unterschiedlicher Federrate lässt sich der Druckregler an Getränke mit unterschiedlichen CO₂-Gehalten anpassen. Die Feinabstimmung auf die CO₂-Gehalte wird durch das Einstellen a n dem Stellmittel bzw. dem Handrad, auf den von z.B. der Brauerei vorgegebenen Druck erreicht.

Gemäß d en M erkmalen d es P atentanspruchs 3 greifen die M ittel zur Ü bertragung der Volumenveränderung des inkompressiblen Fluids an der zweiten Regelfeder an. Diese Übertragungsmittel können beispielsweise stößelartig konfiguriert sein, wobei ein solcher Stößel an dem einen Ende in die zweite Reglerfeder ragt und mit seinem zweiten Ende mit der Expansionskammer gekoppelt ist. Innerhalb der Expansionskammer ist vorzugsweise ein hinsichtlich seiner Längserstreckung variabler Hohlraum vorgesehen, der von einer in Längsrichtung flexiblen Wandung umgeben ist. Diese Wandung kann beispielsweise ein Faltenbalg sein. An dem innenliegenden Stirnende des Hohlraums kann sich der Stößel abstützen. Es ist auch möglich, dass die zweite Regelfeder unmittelbar in diesen Hohlraum einfasst, der dann gleichzeitig zur außenseitigen Führung der Regelfeder dient. Die Regelfeder stützt sich in diesem Fall unmittelbar an der innenliegenden Stirnseite des Hohlraums ab.

In der Ausführungsform des Patentanspruchs 4 ist keine zusätzliche Regelfeder vorgesehen, so dass die Mittel zur Übertragung der Volumenveränderung des inkompressiblen Fluids auf die Hauptregelfeder wirken. Diese Ausführungsform ist insbesondere dann von Vorteil, wenn mit dem angeschlossen Thermoweggeber eine Druckkurve für ein durchschnittliches Bier mit etwa 4,8 g/l CO₂ abdeckt werden kann. Der Einfluss der Zusatzfeder wird auf Grund des eingeschränkten Verwendungsbereiches bei dieser Ausführungsform als vernachlässigbar angesehen, was eine konstruktiv einfachere und kostengünstigere Bauform ermöglicht.

Bei der erfindungsgemäßen Weiterbildung gemäß Patentanspruch 5, ist das dem Ventilsitz abgewandte Ende der Hauptregelfeder an einem linear verlagerbaren Widerlagerkörper abgestützt, an welchem die Stellmittel für die manuelle Einstellung als auch bei angeschlossenem zweiten Druckregler die Mittel zur Übertragung der Volumenveränderung des inkompressiblen Fluids angreifen.

Mit Patentanspruch 6 wird beansprucht, dass der erste Druckregler einen Anschlussraum aufweist, in welchem ein erster Längenabschnitt eines Gehäuses des Temperaturweggebers eingliederbar ist. Im Bereich des Anschlussraums können insbesondere die Mittel zur Ankopplung des Temperaturweggebers vorgesehen sein. Die Mittel zur Ankopplung des Temperaturweggebers sind außerhalb des zylindrischen Innenraums platziert. Grundsätzlich kann die Ankopplung lösbar oder unlösbar erfolgen. Die unlösbare Ankopplung z.B. durch einen Schnappmechanismus beugt nachträglicher Manipulation vor.

Wenn kein Temperaturweggeber installiert ist, kann eine lösbar eingegliederte Abdeckkappe den Anschlussraum verschließen und auf diese Weise die Regelmechanik vor äußeren Einflüssen schützen (Patentanspruch 7). "Lösbar" bedeut in diesem Zusammenhang, dass die Abdeckkappe auch über Sollbruchstellen mit dem ersten Druckregler verbunden sein kann. Wenn die Ankopplung des zweiten Druckreglers ohnehin unlösbar erfolgt ist ein Wiedereinsetzen der Abdeckkappe nicht erforderlich.

In der Ausführungsform des Patentanspruchs 8 ist die Abdeckkappe an dem Stellmittel vorgesehen. Die Abdeckkappe kann bei einer nachträglichen Installation des Temperaturweggebers, beispielsweise mit einem spitzen Gegenstand aus dem Stellmittel herausgehebelt werden und ist bei einer Entfernung des Temperaturweggebers wieder in das Stellmittel einsetzbar. Bei eingesetzter Abdeckkappe wird diese quasi Bestandteil des Stellmittels und bildet mit diesem eine topfförmige Anordnung, so dass das Stellmittel einen Großteil der Reglermechanik schützt.

Gemäß Patentanspruch 9 ist vorgesehen, dass ein mögliches Mittel zur lösbaren Ankopplung des Temperaturweggebers eine Verschraubung mit einem axial verlagerbaren Mitnehmer ist. Auf diese Weise ist eine schnelle und einfache Anbringung des Temperaturweggebers gegebenenfalls ohne Zuhilfenahme von Werkzeugen möglich. Dies ist insbesondere deshalb von Vorteil, da auf diese Weise die zusätzliche Regelfeder entsprechend leicht ausgetauscht werden kann, falls eine Umstellung des Druckreglers auf ein Getränk mit geändertem CO₂-Gehalt erforderlich und eine andere Sättigungsdruckkurve gefahren werden soll. Ein weiterer Vorteil ist, dass trotz der Eingliederung des Temperaturweggebers die manuelle Nachjustierung über das Stellmittel erhalten bleibt und nicht durch die Ankopplung des Temperaturweggebers verloren geht.

Eine weitere Möglichkeit der Ankopplung des Temperaturweggebers ist Gegenstand des Patentanspruchs 10. Danach sind die Mittel zur Ankopplung des Temperaturweggebers Aussparungen und/oder axial orientierte Federzungen an einen axial verlagerbaren, mit dem Stellmittel gekoppelten Mitnehmer, die mit entsprechenden Aussparungen und/oder Federzungen des Gehäuses des Temperaturweggebers zur Bildung einer Schnappverbindung korrespondieren. Bei dieser Ausgestaltung können beispielsweise ausschließlich an dem Gehäuse des Temperaturweggebers geeignete Federzungen vorgesehen sein, die beim Einstecken in die A ussparungen mit einer Rastnase federnd einschnappen und damit einem unbeabsichtigten Lösen des Temperaturweggebers entgegenwirken. Die exakte Lagefixierung des Temperaturweggebers ist von entscheidender Bedeutung für die Regeleigenschaften des kombinierten Druckreglers. Insbesondere muss sichergestellt sein, dass die Federkraft der austauschbaren Regelfeder nicht zu einer Verlagerung des Gehäuses des Temperaturweggebers führt. Bei einer Parallelschaltung der Hauptregelfeder und der austauschbaren Regelfeder ist selbstverständlich zu gewährleisten, dass der Temperaturweggeber lediglich auf die austauschbare Regelfeder und nicht auf die Hauptregelfeder wirkt. D.h., der Temperaturweggeber w ird nicht d urch d ie F ederkraft d er Hauptregelfeder b elastet. Durch diese Trennung ist eine feinfühlige thermische Regelung durch den Temperaturweggebers möglich, die unabhängig von der Federkennlinie der Hauptregelfeder erfolgt.

Ein weiterer wesentlicher Vorteil der Erfindung ist Gegenstand der Ausführungsform des Patentanspruchs 11. Danach ist vorgesehen, dass der Ventilkörper einen Ventilstößel aufweist, welcher im Hinterdruckbereich an einem einen Sekundärentlüftungskanal verschließenden Ventilsitz anliegt. Der Hinterdruckbereich ist durch Betätigung des Stellmittels über den Sekundärentlüftungskanal entlüftbar. Diese Sekundärentlüftungsfunktion verhindert das Aufkarbonisieren des Getränks durch zu hohen Arbeitsdruck bei fallender Außentemperatur. Bei der erfindungsgemäßen Druckregleranordnung ist vorgesehen, dass der Ventilstößel durch Betätigung des Stellmittels von dem den Sekundärentlüftungskanal verschließenden Ventilsitz abhebbar ist, d.h. der Hinterdruck- oder Arbeitsdruckbereich kann manuell entlüftet oder hinsichtlich des Druckniveaus heruntergesetzt werden, ohne das am Zapfhahn Flüssigkeit entnommen werden muss. Diese Entlüftung kann grundsätzlich auch automatisch erfolgen, wenn nämlich der Temperaturweggeber bei fallenden Temperaturen kontrahiert und daher die Kraft der zweiten austauschbaren Regelfeder reduziert wird. In diesem Fall ist bei optimaler Einstellung eine automatische Reduzierung des Arbeitsdruckes bzw. des Hinterdruckes möglich, bis sich bei niedrigerem Arbeitdruck wieder ein Kräftegleichgewicht eingestellt hat und der Ventilstößel wieder am Ventilsitz des Sekundärentlüftungskanals anliegt. Bei dieser Konstruktion passt sich der Arbeitsdruck den Temperaturschwankungen der Umgebung automatisch an, ohne dass der Druckregler manuell nachgeregelt werden muss, um einen höheren Arbeitsdruck bei steigender Temperatur einzustellen und ohne das System z.B. durch Flüssigkeitsentnahme zu entlasten, um auf diese Weise den Bedingungen bei sinkenden Temperaturen gerecht zu werden. Dazu ist es zweckmäßig, das üblicherweise in einem Zapfkopf als Rückschlagventil eingesetzte Lippenventil durch ein Filterelement aus einem hydrophoben Material zu ersetzen, welches gasdurchlässig abernicht flüssigkeitsdurchlässig ist, um auch den überschüssigen Gasanteil in der Zapfanlage abbauen zu können.

Der erste Druckregler der erfindungsgemäßen Druckregleranordnung kann als Hauptdruckregler zum Einsatz kommen, wobei für diesen Fall an dem Reglergehäuse ein an den Hinterdruckbereich angeschlossenes Überdruckventil vorgesehen ist, um zu verhindern, dass bestimmte vorgebbare Maximaldrücke von 3 bzw. 4 bar überschritten werden (Anspruch 12).

An dem Reglergehäuse ist ein Anschlag zur Begrenzung der maximalen Federspannung der Hauptregelfeder a nbringbar oder fest installiert (Anspruch 1 3). Auf diese Weise soll verhindert werden, dass der Arbeitsdruck unabhängig von dem voreingestellten Arbeitsdruck über einen maximal zulässigen Wert steigt. Wird beispielsweise bei einer Temperatur von 5°C ein Gasdruck von 2 bar gestellt, würde bei einem Temperaturanstieg auf 25°C im Arbeitsdruckbereich ein Druck von mindestens 3,4 bar auftreten. Dies gilt es insbesondere dann zu verhindern, wenn der erste Druckregler als Hauptdruckregler eingesetzt wird. Ist hingegen ein Hauptdruckregler vorgeschaltet, so dass der Vordruck des nachgeschalteten Reglers bereits auf den vorgeschriebenen Maximalwert begrenzt ist, ist ein entsprechender Anschlag nicht erforderlich. In diesem Fall benötigt diese zweite Reglerstufe auch kein eigenständiges Überdruckventil.

Gegenstand des Patentanspruchs 14 ist, dass Rastmittel vorgesehen sind, über welche das Stellmittel in unterschiedlichen Rastpositionen gegenüber dem Druckreglergehäuse verrastbar ist. Die Verrastbarkeit des Stellmittels gegenüber dem Druckreglergehäuse verhindert eine unerwünschte Verstellung der einmal gewählten D rücke d urch u nsachgemäße H andhabung o der a ndere E inflüsse. E ine Verstellsicherung, z.B. eine Verplombung in der Raststellung ist möglich.

In der Ausgestaltung des Patentanspruchs 15 ist der Temperaturweggeber bzw. das Gehäuse des Temperaturweggebers verdrehfest mit dem Stellmittel verbunden. Die Verdrehsicherung erfolgt vorzugsweise mittelbar, d.h. durch Zwischenschaltung eines Mitnehmers, and em der Temperaturweggeber befestigt ist. D.h., dass auch mit der Betätigung des Stellmittels und der daraus resultierenden Änderung der Federvorspannung der Hauptregelfeder und/oder gleichzeitig die Federvorspannung der zweiten Regelfeder verändert wird.

Wichtig ist, dass der Temperaturweggeber seine axiale Lage nicht gegenüber dem Mitnehmer verändert. Er ist daher axial sicherbar mit dem Mitnehmer verbunden (Patentanspruch 16).

Das Stellmittel ist gemäß den Merkmalen des Patentanspruchs 17 topfförmig oder auch napfförmig konfiguriert, wobei seine Stirnseite von dem Temperaturweggeber durchsetzt ist.

Die Erfindung wird nachfolgend anhand der in Zeichnungen dargestellten Ausführungsbeispiele näher erläutert. Es zeigt:
- Figur 1: den Verlauf des Sättigungsdrucks von einem Getränk, z.B. Bier mit unterschiedlich hohen CO₂-Gehalten, aufgetragen über die Temperatur;
- Figur 2: die Kurvenverläufe der Figur 1 und zusätzlich eine mögliche Linearisierung in einem Temperaturbereich von 0-25°C;
- Figur 3: eine erste Ausführungsform der erfindungsgemäßen Druckregleranordnung im Querschnitt ohne Temperaturweggeber;
- Figur 4: den Druckregler der Figur 3 mit Temperaturweggeber;
- Figur 5: eine weitere Ausführungsform der Druckregleranordnung, ebenfalls im Querschnitt, eingesetzt als Sekundärdruckregler;
- Figur 6: die Ausführungsform der Figur 5 im Einsatz als Primärdruckregler;
- Figur 7 und 8: eine weitere Ausführungsform ohne zusätzliche Regelfeder ebenfalls im Querschnitt und
- Figur 9: die Ausführungsform der Figuren 7 und 8 ohne Temperaturweggeber.

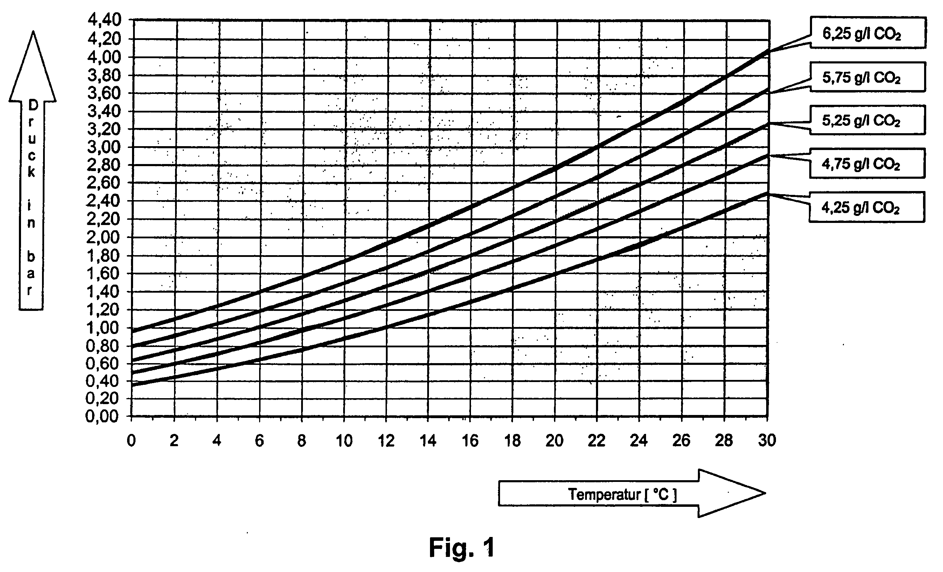

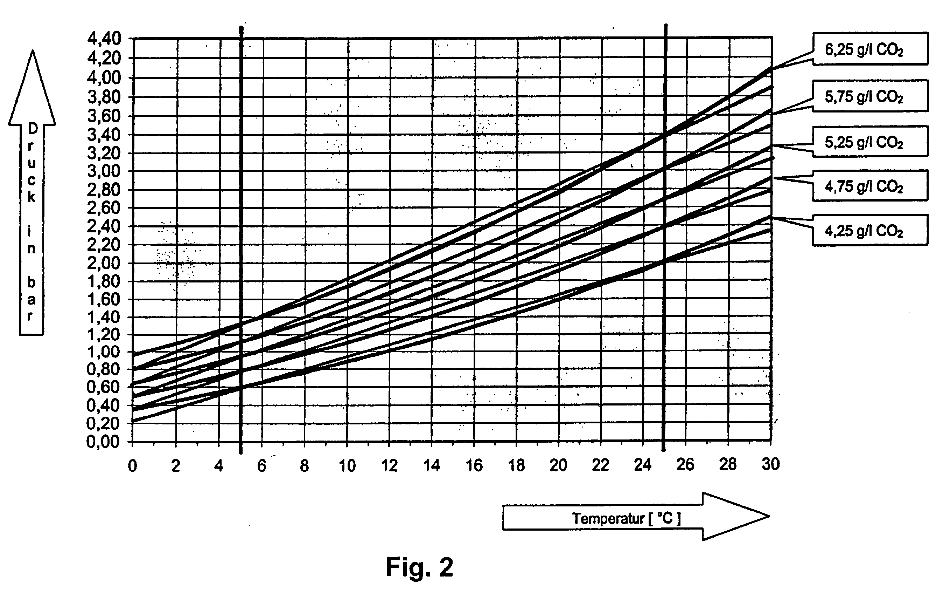

Figur 1 zeigt, bei welcher Temperatur und welchem CO₂-Gehalt ein bestimmter Sättigungsdruck gegeben ist. Für jeden einzelnen CO₂-Gehalt gibt es eine eigene Kurve, die leicht gekrümmt ist und deren Steigung mit zunehmendem CO₂-Gehalt zunimmt. Im Optimalfall bildet ein Druckregler exakt diese Kurvenverläufe nach. Da der erfindungsgemäße Druckregler mit Federn arbeitet und die Federkennlinie einer herkömmlichen Schraubendruckfeder linear verläuft, wurden die Kurvenverläufe gemäß Figur 1 innerhalb eines Temperaturbereichs von 0°C bis 25°C idealisiert, d.h. linearisiert. Bei den Temperaturen 5°C und 25°C wurden Schnittpunkte mit den Kurven gebildet und die jeweiligen Schnittpunkte durch Geraden verbunden. Somit ergibt sich ein idealisierter Arbeitsbereich von 0°C bis 30°C, der den meisten Bedingungen in der Schanktechnik gerecht wird. Durch den Einbau einer Thermoregelfeder mit unterschiedlicher Federrate lässt sich ein entsprechender Druckregler auf Getränke mit unterschiedlich hohen CO₂-Gehalten anpassen. Die Feinabstimmung auf CO₂-Gehalte zwischen den beispielhaft gezeigten Kurven gemäß Figur 1 und 2 wird durch Einstellen am Stellmittel auf den z.B. von der Brauerei vorgegebenen Druck erreicht. Dadurch ergibt sich eine Parallelverschiebung der Kurven nach oben und unten, was für den praktischen Betrieb ausreichend genau genug ist, solange die Abstufung der CO₂-Gehalte klein genug gewählt wurde. Durch die Verwendung unterschiedlicher zusätzlicher Regelfedern kann eine unterschiedliche Steigung der Geraden erzielt werden. Beispielsweise könnte bei einem Bier mit einem CO₂-Gehalt von 4,25 g/l eine Regelfeder zum Einsatz kommen, die eine geringere Federsteifigkeit aufweist, als eine Regelfeder für ein Getränk mit 6,25 g/l CO₂.

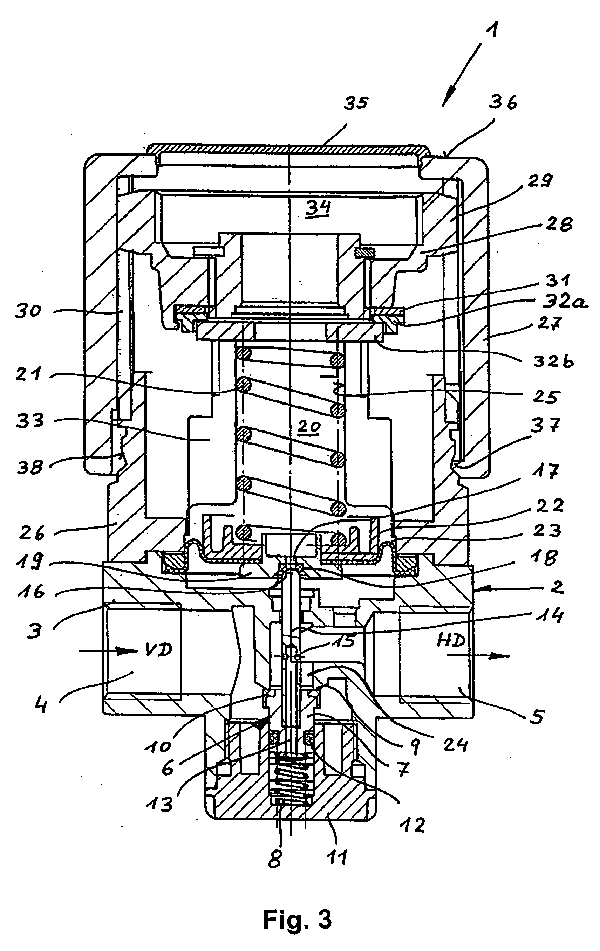

Figur 3 zeigt eine Ausführungsform eines ersten Druckreglers 1 als Basiskomponente einer Druckregleranordnung. Der Druckregler 1 besitzt ein Reglergehäuse 2 mit einem unteren Gehäuseteil 3 mit einem Zuflusskanal 4, an dem der Vorderdruck VD anliegt und einem Hinterdruckkanal 5, an dem der Hinterdruck HD oder Arbeitsdruck anliegt. In dem unteren Gehäuseteil 3 befindet sich ein Regelventil 6 mit einem Ventilkörper 7, der von einer Schließfeder 8 in Bildrichtung nach oben gegen einen Dichtsitz 9 gedrückt wird. An dem Ventilkörper 7 ist ein Dichtelement 10 anvulkanisiert und dichtet bei Anlage an dem Dichtsitz 9 den Vordruckbereich VD gegen den Hinterdruckbereich HD ab. Die Schließfeder 8 stützt sich gegen eine Schraubkappe 11 ab, die in das Reglergehäuse 2 eingeschraubt ist. Der Ventilkörper 7 ist in einer Bohrung der Schraubkappe 11 geführt und über einen Dichtring 12 gegen diese abgedichtet. Die Entlüftung der die Schließfeder 8 aufnehmenden Bohrung erfolgt über einen den Ventilkörper 7 in Längsrichtung durchsetzenden Entlüftungskanal 13, der mit dem Hinterdruckbereich HD fluidleitend in Verbindung steht. Der Ventilkörper 7 ist fest mit einem Ventilstößel 14 verbunden, der über einen Teil seiner Länge ebenfalls von dem Entlüftungskanal 13 durchsetzt ist. Eine Querbohrung 15 verbindet den Entlüftungskanal 13 mit dem Hinterdruckbereich HD.

Der Ventilstößel 14 stützt sich gegen einen Ventilsitz 16 ab und verschließt in der dargestellten Position einen Sekundärentlüftungskanal 17. Die Spitze des Ventilstößels 14 liegt dabei an einem weiteren Dichtelement 18 an, das in ein Zentrierstück 19 eingelassen ist. Das Zentrierstück 19 ist von dem Sekundärentlüftungskanal 17 in Längsrichtung durchsetzt. Der Sekundärentlüftungskanal 17 mündet in einen zylindrischen Innenraum 20 der von einer Hauptregelfeder 21 umgeben ist. Dieser Innenraum 20 ist nicht gasdicht gegenüber der Atmosphäre abgedichtet, so dass d as aus dem Hinterdruckbereich HD abströmende Gas über den Sekundärentlüftungskanal 17 der Atmosphäre zugeführt wird.

Das Zentrierstück 19 umschließt zusammen mit einem Federteller 22 einen inneren Bereich einer Membran 23, die den Hinterdruckbereich HD von der Atmosphäre trennt. Über den Federteller 22 wird die Membran 23 von der Federkraft der Hauptregelfeder 21 beaufschlagt u nd k ann s ich innerhalb e ines Regelbereichs a uf und ab bewegen. Grundsätzlich wird die Bewegung der Membran bzw. des Federtellers und des damit verbundenen Zentrierstücks 19, auf den Ventilstößel 14 und damit auf den Ventilkörper 7 übertragen, so dass der Überströmkanal 24 zwischen Vordruckbereich und Hinterdruckbereich geöffnet und geschlossen wird.

Die Hauptregelfeder 21 befindet sich innerhalb einer Führungsbohrung 25 eines oberen Gehäuseteils 26, das im Höhenbereich der Membran 23 mit dem unteren Gehäuseteil 3 verbunden ist. An diesem oberen, feststehenden G ehäuseteil 2 6 ist außenseitig ein topfartiges Stellmittel 27 in Form eines Handrads verdrehbar gelagert. Die Drehung an dem Stellmittel 27 bewirkt, dass ein linear gegenüber dem oberen Gehäuseteil 26 verlagerbarer Mitnehmer 28 in eine Drehbewegung versetzt wird. Hierfür sind an dem Mitnehmer 28 Mitnehmerzapfen 29 ausgebildet, die in Längsnuten 30 des Stellmittels 27 eingreifen. In diesem Fall sind die Mitnehmerzapfen Ecken e ines Außensechskantprofils, die in e ntsprechende Ecken eines Innensechskantprofils greifen. Der Mitnehmer 28 wirkt unter Eingliederung einer Gleitscheibe 31 auf einen Druckring 32a. Dieser liegt an einer Druckscheibe 32b an, welche Nuten 33 in der Wandung der Führungsbohrung 25 durchsetzt und ein axial verschiebliches Gegenlager zur Hauptregelfeder 21 bildet.

Der zylindrische Innenraum 20 innerhalb der Hauptregelfeder 21 mündet in einen im Durchmesser größeren Anschlussraum 34, der zur Aufnahme des Gehäuses des Temperaturweggebers dient. Dieser Anschlussraum 34 ist in der Ausführungsform der Figur 3 von einer Abdeckkappe 35 verschlossen. Die Abdeckkappe 35 ist in eine korrespondierende Öffnung in der Stirnfläche 36 des Stellmittels 27 lösbar fixiert und kann beispielsweise unter Zuhilfenahme eines Schraubendrehers aus dieser gelöst werden.

Das Stellmittel 27 in Form des Handrads kann in Längsrichtung, d.h. in Richtung seiner Mittellängsachse verlagert werden. Hierbei wird eine dem unteren Gehäuseteil 3 zugewandte Rastnase 37 auf einer Rastnut 38 in Bildebene nach oben verlagert, so dass die durch die Rastnase 37 und die Rastnut 38 gegebene Verrastung aufgehoben wird und eine Drehbewegung des Stellmittels 27 möglich wird. Nach Erreichen der gewünschten Einstellung wird das Stellmittel 27 wieder nach unten, d.h. in Richtung zur Rastnut 38 gedrückt, wo die Rastnase 37 einrastet und das Stellmittel 27 verdrehfest gegenüber dem oberen Gehäuseteil 26 arretiert.

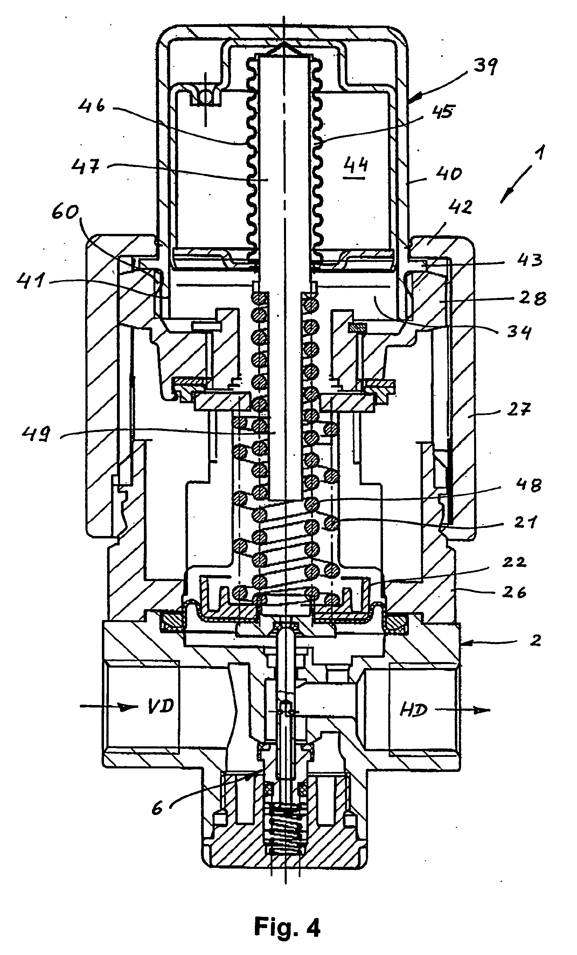

Die Ausführungsform der Figur 4 unterscheidet sich von derjenigen der Figur 3 lediglich durch einen zusätzlich angeordneten Temperaturweggeber 39. Im Übrigen werden die bislang eingeführten Bezugszeichen weiterhin verwendet. Der Temperaturweggeber 39 umfasst e in G ehäuse 4 0, d essen A ußendurchmesser a uf den Anschlussraum 34 abgestimmt ist und dessen erster Längenabschnitt 41 in den Anschlussraum 34 fasst. Das Gehäuse 40 des Temperaturweggebers 39 ist im Höhenbereich des Anschlussraums 34 über eine Gewindepaarung 60 in den Mitnehmer 28 eingeschraubt. Der Ring 43 liegt an der Stirnseite des Mitnehmers 28 plan an und dient zur exakten senkrechten Ausrichtung des Temperaturweggebers 39 gegenüber dem Mitnehmer 28. Ein radial nach innen vorstehender Kragen 42 des Stellmittels 27 übergreift den außenseitig vorstehenden Ring 43 am Gehäuse 40 des Temperaturweggebers 39. Innerhalb des Gehäuses 40 befindet sich eine mit einem inkompressiblen Fluid, wie beispielsweise Ethylester gefüllte Expansionskammer 44. Die Expansionskammer 44 ist als Ringraum konfiguriert mit einem inneren Hohlraum 45, der von einer in Längsrichtung flexiblen Wandung in Form eines Faltenbalgs 46 umgeben ist. Innerhalb des Hohlraums 45 befindet sich ein Stößel 47, der sich mit seinem einen Ende an der Stirnseite des Hohlraums 45 abstützt und mit seinem anderen Ende auf eine zweite Regelfeder 48 wirkt. Der Stößel 47 weist einen Kragen auf, an dem sich die Regelfeder 48 abstützt. Die Regelfeder 48 wird an einem innenliegenden D orn 49 des S tößels 4 7 geführt u nd g egen A usknicken g eschützt. Die austauschbare Regelfeder 48 liegt ebenso wie die Hauptregelfeder 21 an dem Federteller 22. Die Federvorspannung der Regelfeder 48 wird sowohl durch die Auslenkung des Stößels 47 des Temperaturweggebers 39 beeinflusst, als auch durch die Betätigung des Stellmittels 27.

Der mögliche Federweg muss so groß bemessen sein, dass bei maximaler Druckeinstellung das Stellmittel 27 und entsprechende Auslenkung des Temperaturweggebers 39 die Regelfeder 48 und der Stößel 47 diesen Hub zulassen, ohne auf Block zu fahren.

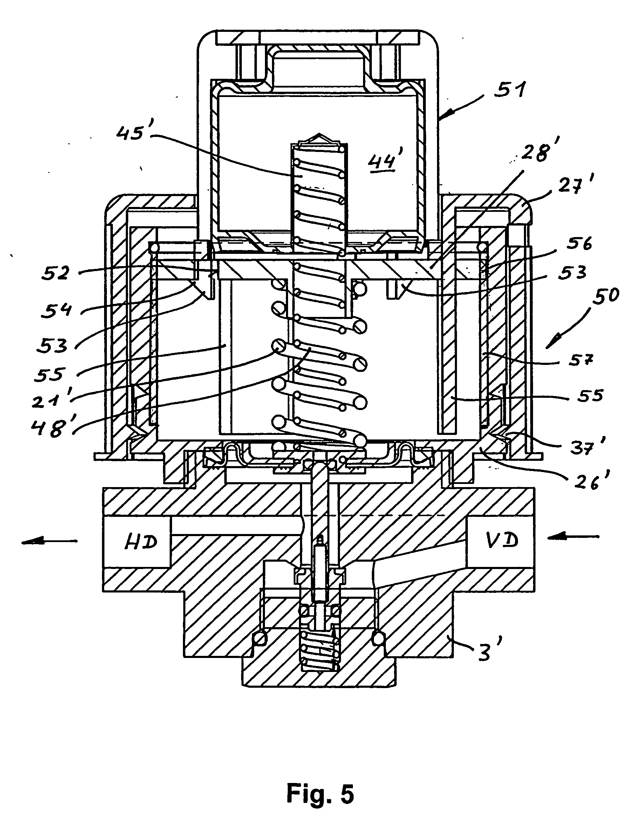

Die Ausführungsform der Figur 5 zeigt eine weitere Variante eines Druckreglers 50, wobei nachfolgend nur auf die technisch relevanten Unterschiede zu den Ausführungsformen der Figuren 3 und 4 eingegangen wird. Es wird zum Teil auf Bezugszeichen zu den Figuren 3 und 4 zurückgegriffen.

Der Druckregler 50 unterscheidet sich von der vorherigen Ausführungsform zum einen durch eine anders gestaltete Kanalführung. Der Vorderdruckbereich VD befindet sich bei dieser Ausführungsform in der Bildebene rechts und der Hinterdruckbereich HD links. Das funktionelle Zusammenspiel der Komponenten des unteren Gehäuseteils 3 entspricht derjenigen der Figuren 3 und 4. Auf die Beschreibung zu den Figuren 3 und 4 wird daher Bezug genommen.

Auch der dargestellte Druckregler 50 kann sowohl mit als auch ohne Temperaturweggeber 51 zum Einsatz kommen. Bei dieser Ausführungsform ist der Temperaturweggeber 51 nicht mit einem Mitnehmer verschraubt, sondern über eine Schnappverbindung mit einem Mitnehmer 28' verbunden. Hierzu sind in dem scheibenförmigen Mitnehmer 28' mehrere auf dem Umfang verteilte Aussparungen 52 vorgesehen, in welche sich in axiale Richtung erstreckende Federzungen 53 des Temperaturweggebers 51 einfassen und über endseitige Nasen 54 gegen Herausfallen gesichert sind.

Das Stellmittel 27' weist in dieser Ausführungsform sich in Axialrichtung erstreckende Mitnehmerstege 55 auf, die nicht näher dargestellte Öffnungen in dem Mitnehmer 28' durchsetzen, so dass bei einer Drehbewegung des Stellmittels 27' einschließlich der einstückig damit ausgebildeten Mitnehmerstege 55 der scheibenförmige Mitnehmer 28' in einer Drehbewegung versetzt wird. Der Mitnehmer 28' ist über ein Außengewinde 56 mit einem Innengewinde 57 in dem feststehenden oberen Gehäuseteil 26' gelagert, so dass die Drehbewegung in eine translatorische Bewegung übersetzt wird. Die translatorische Bewegung bewirkt eine Veränderung der Vorspannung der Hauptregelfeder 21', sowie der parallel zu der Hauptregelfeder 21' geschalteten innenliegenden zweiten Regelfeder 48'. Im Unterschied zu der ersten Ausführungsform greift die Regelfeder 48' ohne Zwischenschaltung eines Stößels unmittelbar in den Hohlraum 45' der Expansionskammer 44' ein und stützt sich dort an der Stirnseite des Hohlraums 45' ab.

Auch bei dieser Ausführungsform sind Rastmittel 37' zwischen dem Stellmittel 27' und dem feststehenden oberen Gehäuseteil 26' vorgesehen. Das Stellmittel 27' ist zur Einstellung der Vorspannung aus einer Rastposition axial zur Bildebene nach oben verlagerbar und kann anschließend wieder in die Rastposition überführt werden.

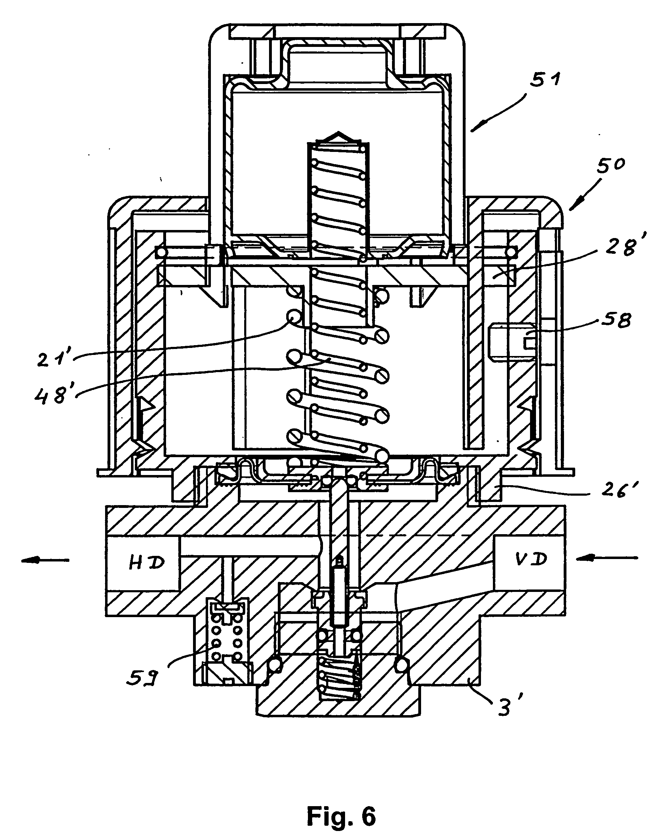

Die Ausführungsform der Figur 6 unterscheidet sich von derjenigen der Figur 5 bedingt durch den unterschiedlichen Einsatzzweck. Während die Ausführungsform der Figur 5 als Sekundärregler zum Einsatz kommen kann, der einem Hauptdruckregler nachgeschaltet ist, d.h. maximal mit einem Vordruck von z.B. 3 bis 4 bar gespeist w ird, k ann bei einer Verwendung des D ruckreglers d er F igur 5 als Hauptdruckregler eine unzulässige Überschreitung d es maximal zulässigen Drucks erfolgen. Daher sind bei der Verwendung als Hauptdruckregler zusätzliche Sicherheitsmittel vorgesehen (Figur 6). Dies ist zum einen ein Anschlag 58 in Form einer Madenschraube, die radial nach innen gerichtet in das obere Gehäuseteil 26' eingeschraubt ist und den maximalen Verstellweg des Mitnehmers 28' begrenzt. Auf diese Weise kann durch manuelle Betätigung des Stellmittels 27' die Vorspannung der Hauptregelfeder 21' und der Regelfeder 48' nur bis zu einem bestimmten Maß gesteigert werden. S o wird gewährleistet, d ass b ei m aximaler a xialer A usdehnung des Temperaturweggebers die auf die Membrane wirkende Kraft niemals einen Wert ergibt, der als Gegenreaktion einen höheren Druck als den Abblasdruck des Sicherheitsventils ergibt. Das Überdruckventil 59 ist entsprechend einschlägigen Sicherheitsbestimmungen vorgeschrieben und stellt sicher, dass im Fall einer Fehlfunktion des Druckreglers der Hinterdruck HD einen vorgebbaren Maximaldruck nicht überschreitet. Im Übrigen entspricht diese Ausführungsform derjenigen der Figur 5.

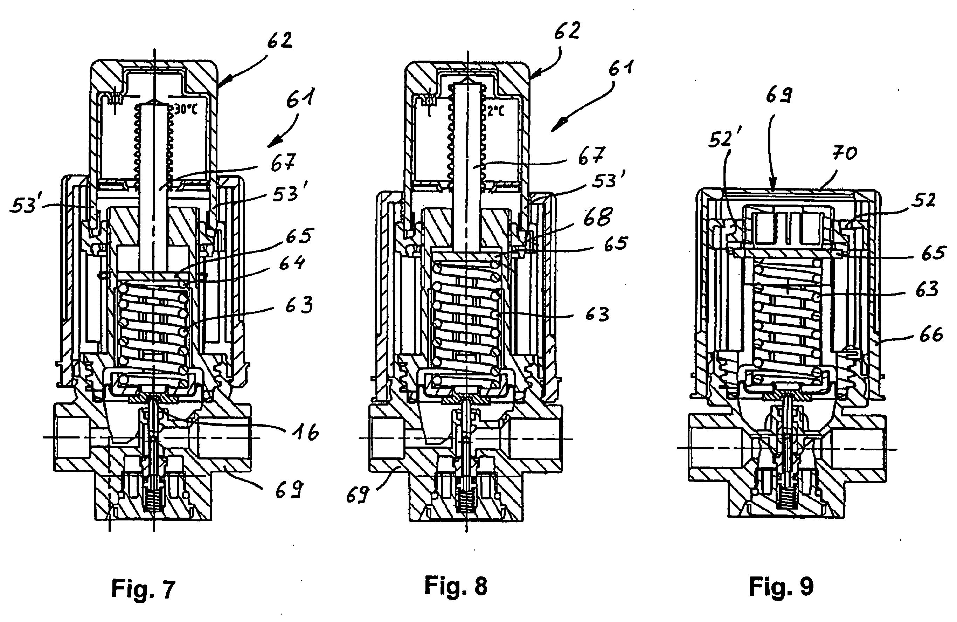

Die Ausführungsform der Druckregleranordnung 61 der Figuren 7 bis 9 unterscheidet sich von den vorhergehenden dadurch, dass der Temperaturweggeber 62 unmittelbar auf die Hauptregelfeder 63 wirkt. Eine zusätzliche Regelfeder ist bei dieser Bauform nicht vorgesehen.

Das dem Ventilsitz 16 abgewandte Ende 64 der Hauptregelfeder 63 ist an einem linear verlagerbaren Widerlagerkörper 65 abgestützt, an welchem die Stellmittel 66 für die manuelle Einstellung als auch - bei angeschlossenem zweiten Druckregler 62 - die Mittel 67 zur Übertragung der Volumenveränderung des inkompressiblen Fluids angreifen. Der Widerlagerkörper 65 dient als Angriffsfläche für den zentral geführten Stößel 67, der die Federvorspannung über die Verlagerung des Widerlagerkörpers 65 beeinflusst. Der Widerlagerkörper 65 entspricht in seiner Funktion für die Hauptregelfeder 63 dem Mitnehmer 28' der Figur 5 bzw. der Druckscheibe 32b in Figur 3.

In Figur 7 beträgt die Raumtemperatur z.B. 30 °C, so dass der Stößel 67 weit ausgefahren ist und den Widerlagerkörper 65 in der Bildebene nach unten drückt. Die Federvorspannung ist hoch. Dahingegen zeigt Figur 8 die Lage des Stößels 67 bei einer Raumtemperatur von nur 2 °C. Der Stößel 67 befindet sich in seiner oberen Lage. Die Federvorspannung der Hauptregelfeder 63 ist dadurch geringer.

In Figur 9 ist der erste Druckregler 69 dargestellt ohne dass ein Temperaturweggeber angeschlossen ist. Der Widerlagerkörper 65 befindet sich in seiner oberen Totlage und kann ausschließlich durch manuelle Drehung des Stellmittels 66 nach unten verlagert werden, um auf diese weise manuell die Vorspannung der Hauptregelfeder 63 zu erhöhen. Das Stellmittel 66 ist stirnseitig mit einer radialen Ausnehmung versehen, die es erlaubt die Abdeckkappe 70 herauszubrechen.

Der Temperaturweggeber 62 wird über eine Schnappverbindung mit dem Mitnehmer 68 verbunden (Figuren 7 und 8). Hierzu sind in dem scheibenförmigen Mitnehmer 68 mehrere auf dem Umfang verteilte Aussparungen 52' vorgesehen, in welche sich in axiale Richtung erstreckende Federzungen 53' des Temperaturweggebers 62 einfassen. Die Federzungen 5 3' federn beim Einsetzen des Temperaturweggebers 62 zunächst nach innen und schnappen beim Einrasten nach außen und werden über endseitige Nasen gegen Herausfallen gesichert.

Die Erfindung ermöglicht eine automatische thermisch geregelte Beeinflussung des Sättigungsdruckes in einer Zapfanlage, abhängig von dem getränkespezifischen CO₂-Gehalt bei zunehmender und abnehmender Temperatur durch lineare Annäherung an den kurvenförmigen Sättigungsdampfdruckverlauf innerhalb eines Arbeitsbereiches von z.B. 0°C bis 30°C.

### Bezugszeichenaufstellung

- 1 -: Druckregler
- 2 -: Reglergehäuse
- 3 -: unteres Gehäuseteil
- 3' -: unteres Gehäuseteil
- 4 -: Zuflusskanal
- 5 -: Hinterdruckwand
- 6 -: Regelventil
- 7 -: Ventilkörper
- 8 -: Schließfeder
- 9 -: Dichtsitz
- 10 -: Dichtelement
- 11 -: Schraubkappe
- 12 -: Dichtring
- 13 -: Entlüftungskanal
- 14 -: Ventilstößel
- 15 -: Querbohrung
- 16 -: Ventilsitz
- 17 -: Sekundärentlüftungskanal
- 18 -: Dichtelement
- 19 -: Zentrierstück
- 20 -: Innenraum
- 21 -: Hauptregelfeder
- 21' -: Hauptregelfeder
- 22 -: Federteller
- 23 -: Membran
- 24 -: Überströmband
- 25 -: Führungsbohrung
- 26 -: oberes Gehäuseteil
- 26' -: oberes Gehäuseteil
- 27 -: Stellmittel
- 27' -: Stellmittel
- 28 -: Mitnehmer
- 28' -: Mitnehmer
- 29 -: Mitnehmerzapfen
- 30 -: Längsnuten
- 31 -: Gleitscheibe
- 32a -: Druckring
- 32b -: Druckscheibe
- 33 -: Nuten
- 34 -: Anschlussraum
- 35 -: Abdeckkappe
- 36 -: Stirnfläche
- 37 -: Rastnase
- 37' -: Rastnase
- 38 -: Rastnut
- 39 -: Temperaturweggeber
- 40 -: Gehäuse
- 41 -: Längenabschnitt
- 42 -: Kragen
- 43 -: Ring
- 44 -: Expansionskammer
- 44' -: Expansionskammer
- 45 -: Hohlraum
- 45' -: Hohlraum
- 46 -: Faltenbalg
- 47 -: Stößel
- 48 -: Regelfeder
- 48' -: Regelfeder
- 49 -: Dorn
- 50 -: Druckregler
- 51 -: Temperaturweggeber
- 52 -: Aussparungen
- 52' -: Aussparungen
- 53 -: Federzungen
- 53' -: Federzungen
- 54 -: Nasen
- 55 -: Mitnehmerstege
- 56 -: Außengewinde
- 57 -: Innengewinde
- 58 -: Anschlag
- 59 -: Überdruckventil
- 60 -: Gewindepaarung
- 61 -: Druckregleranordnung
- 62 -: Temperaturweggeber
- 63 -: Hauptregelfeder
- 64 -: Widerlagerkörper
- 65 -: Ende v. 63
- 66 -: Stellmittel
- 67 -: Stößel
- 68 -: Mitnehmer
- 69 -: erster Druckregler
- 70 -: Abdeckkappe

- VD -: Vorderdruck
- HD -: Hinterdruck

## Patentansprüche

1. Druckregleranordnung umfassend
a) einen ersten Druckregler (1, 69) zur Regelung des Gasdrucks eines insbesondere CO₂-haltigen Gases in einer Zapfanlage mit einem Reglergehäuse (2), in welchem ein Regelventil (6) mit einem gegenüber dem Reglergehäuse (2) verlagerbaren Ventilkörper (7) angeordnet ist, welcher einerseits von einer Schließfeder (8) in einer Schließstellung gehalten ist und andererseits zumindest mittelbar gegen eine Hauptregelfeder (21, 21', 63) abgestützt ist, deren Vorspannung über Stellmittel (27, 27', 66) manuell einstellbar i st u nd deren F ederkraft d er S chließfeder ( 8) e ntgegenwirkt, u nd welcher Mittel zur Ankopplung eines Temperaturweggebers (39, 51, 62) aufweist;
b) einen zweiten Druckregler (39, 51, 62) in Form eines Temperaturweggebers, welcher eine mit einem inkompressiblen Fluid gefüllte Expansionskammer (44, 44') besitzt und Mittel zur Übertragung der Volumenumänderung des Fluids in eine auf eine gegen die Federkraft der Schließfeder (8) gerichtete Feder (21, 21', 63, 48, 48') wirkende Linearbewegung aufweist, und über die Mittel zur Ankopplung nachträglich mit dem ersten Druckregler (1, 69) koppelbar ist,
**dadurch gekennzeichnet,dass**
der zweite Druckregler (39, 51, 62) unter Aufrechterhaltung der manuellen Einstellbarkeit des ersten Druckreglers (1, 69) an den ersten Druckregler (1, 69) ankoppelbar ist.

2. Druckregleranordnung nach Anspruch 1, **dadurch gekennzeichnet, dass** die Hauptregelfeder (21, 21') einen offenen zylindrischen Innenraum (20) umschließt, in den in Parallelschaltung eine weitere austauschbar Regelfeder (48, 48') eingliederbar ist.

3. Druckregleranordnung nach Anspruch 1 oder 2, **dadurch gekennzeichnet, dass** die Mittel zur Übertragung der Volumenveränderung des inkompressiblen Fluids auf die zweite Regelfeder (48, 48') wirken.

4. Druckregleranordnung nach Anspruch 1, **dadurch gekennzeichnet, dass** die Mittel (67) zur Übertragung der Volumenveränderung des inkompressiblen Fluids auf die Hautregelfeder (63) wirken.

5. Druckregleranordnung nach Anspruch 4, **dadurch gekennzeichnet, dass** das dem Ventilsitz abgewandte Ende (64) der Hauptregelfeder (63) an einem linear verlagerbaren Widerlagerkörper (65) abgestützt ist, an welchem die Stellmittel (66) für die manuelle Einstellung als auch bei angeschlossenem zweiten Druckregler (62) die Mittel (67) zur Übertragung der Volumenveränderung des inkompressiblen Fluids angreifen.

6. Druckregleranordnung nach einem der Ansprüche 1 bis 5, **dadurch gekennzeichnet, dass** der erste Druckregler (1, 69) einen Anschlussraum (34) aufweist, in welchen ein erster Längenabschnitt (41) eines Gehäuses (40) des Temperaturweggebers (39, 51, 62) eingliederbar ist.

7. Druckregleranordnung nach Anspruch 6, **dadurch gekennzeichnet, dass** der Anschlussraum (34) mit einer lösbar eingegliederten Abdeckkappe (35, 70) verschließbar ist.

8. Druckregleranordnung nach Anspruch 6, **dadurch gekennzeichnet, dass** die Abdeckkappe (35, 70) an dem Stellmittel (27, 66) vorgesehen ist.

9. Druckregleranordnung nach einem der Ansprüche 1 bis 8, **dadurch gekennzeichnet, dass** ein Mittel zur lösbaren Ankopplung des Temperaturweggebers eine Gewindepaarung zwischen dem Temperaturweggeber und einem gegenüber dem Reglergehäuse axial verlagerbaren Mitnehmer (28) ist, welcher gegenüber dem Stellmittel (27) verdrehfest ist.

10. Druckregleranordnung nach einem der Ansprüche 1 bis 8, **dadurch gekennzeichnet, dass** ein Mittel zur Ankopplung des Temperaturweggebers (51, 62) Aussparungen (52, 52') und/oder axial orientierte Federzungen (53, 53') an einem axial verlagerbaren, mit dem Stellmittel (27', 66) gekoppelten Mitnehmer (28', 68) sind, die mit entsprechenden Aussparungen und/oder Federzungen (53, 53') des Gehäuses des Temperaturweggebers (51, 62) zur Bildung einer Schnappverbindung korrespondieren.

11. Druckregleranordnung nach einem der Ansprüche 1 bis 10, **dadurch gekennzeichnet, dass** der Ventilkörper (7) einen Ventilstößel (14) aufweist, welcher im Hinterdruckbereich (HD) an einem einen Sekundärentlüftungskanal (17) verschließenden Ventilsitz (18) anliegt, wobei der Hinterdruckbereich (HD) durch Betätigung des Stellmittels (27, 27', 66) und/oder durch thermisch bedingte Reduzierung der gegen die Schließfeder (8) wirkenden Federkraft über den Sekundärentlüftungskanal (17) entlüftbar ist.

12. Druckregleranordnung nach einem der Ansprüche 1 bis 11, **dadurch gekennzeichnet, dass** dem Reglergehäuse (2) ein an den Hinterdruckbereich (HD) angeschlossenes Überdruckventil (59) zugeordnet ist.

13. Druckregleranordnung nach einem der Ansprüche 1 bis 12, **dadurch gekennzeichnet, dass** an dem Reglergehäuse (26') ein Anschlag (58) zur Begrenzung der maximalen Federvorspannung der Hauptregelfeder (21') und/oder Regelfeder (48') anbringbar ist.

14. Druckregleranordnung nach einem der Ansprüche 1 bis 13, **dadurch gekennzeichnet, dass** Rastmittel (37, 38) vorgesehen sind, über welche das Stellmittel (27, 27', 66) in unterschiedlichen Rastpositionen gegenüber den Druckreglergehäuse (26, 26', 69) verrastbar ist.

15. Druckregleranordnung nach einem der Ansprüche 1 bis 14, **dadurch gekennzeichnet, dass** der Temperaturweggeber (39, 51, 62) verdrehfest mit dem Stellmittel (27, 27', 66) verbunden ist.

16. Druckregleranordnung nach einem der Ansprüche 1 bis 15, **dadurch gekennzeichnet, dass** der Temperaturweggeber (39, 51, 62) axial sicherbar mit dem Mitnehmer (28, 28', 68) verbunden ist.

17. Druckregleranordnung nach einem der Ansprüche 1 bis 16, **dadurch gekennzeichnet, dass** das Stellmittel (27, 27', 66) topfförmig konfiguriert ist, wobei seine Stirnfläche (36) von dem Temperaturweggeber (39, 51, 62) durchsetzt ist.
